# EUROPEAN PATENT SPECIFICATION

(11) **EP 1 618 633 B1**
(45) Date of publication and mention of the grant of the patent: **23.08.2006**
(21) Application number: 04728603.4
(22) Date of filing: 21.04.2004
(51) Int. Cl.: H01S 3/109, H01S 3/042

(54) **LASER APPARATUS FOR GENERATING A VISIBLE LASER BEAM**
LASERVORRICHTUNG ZUR ERZEUGUNG EINES SICHTBAREN LICHTSTRAHLS
APPAREIL LASER PERMETTANT DE PRODUIRE UN FAISCEAU LASER VISIBLE

(30) Priority: 23.04.2003 IT TO20030317
(43) Date of publication of application: 25.01.2006
(73) Proprietor: BRIGHT SOLUTIONS SOLUZIONI LASER INNOVATIVE S.R.L, 27100 Cura Carpignano (IT)
(72) Inventor: DELL'ACQUA, Stefano, I-27100 Pavia (IT); PICCINNO, Giuliano, I-27028 San Martino Siccomario ( PV ) (IT)
(74) Representative: Ripamonti, Enrico
(86) International application number: PCT/IB2004/001197
(87) International publication number: WO 2004/095660

(56) References cited:
- EP-A- 0 814 546
- US-A- 5 187 714
- US-A- 6 049 555
- US-A- 6 141 369
- US-B1- 6 287 298
- AGNESI A ET AL: "Efficient 1.9 W green diode-pumped cw intracavity doubled Nd:YVO4 laser" CLEO '97: CONFERENCE ON LASERS AND ELECTRO-OPTICS. BALTIMORE,MD, MAY 18 - 23, 1997, CLEO : CONFERENCE ON LASERS AND ELECTRO-OPTICS, NEW YORK, IEEE, US, 18 May 1997 (1997-05-18), pages 519-520, XP010233431 ISBN: 0-7803-4125-2
- LAPERLE P ET AL: "TUNABLE DIODE-PUMPED AND FREQUENCY-DOUBLED CR:LISAF LASERS" APPLIED OPTICS, OPTICAL SOCIETY OF AMERICA,WASHINGTON, US, vol. 36, no. 21, 20 July 1997 (1997-07-20), pages 5053-5057, XP000699168 ISSN: 0003-6935

## Description

The present invention relates to a diode pumped laser apparatus for generating a visible power beam, of the type comprising: a miniaturised linear laser cavity with very low losses, comprising at least the following optical elements: reflecting means, highly reflecting at a fundamental wavelength, at least one of said reflecting means being traversed by a pumping beam, at least one of said reflecting means reflecting at the fundamental wavelength and at the second harmonic wavelength and at least one of said reflecting means being highly transmissive at the second harmonic of said fundamental wavelength; an active material with polarized emission and with a gain configuration with small thermal aberration for the cavity mode, said active material being able to generate laser light at a fundamental wavelength; a non linear crystal (20) within said cavity (72).

It is well known that the most efficient method to obtain laser light at visible wavelengths with high power and spatial quality of the beam consists of applying frequency duplication techniques within the laser cavity of an infrared laser beam, of the type generated for example by active Nd³⁺ ions diffused in an appropriate crystal matrix. In particular, the use of laser materials such as Nd³⁺:Y₃Al₅O₁₂ (Nd:YAG) and appropriate non linear crystals allows to obtain, by frequency duplication processes, wavelengths around 0.48 mm (blue), 0.53 mm (green), 0.56 mm (yellow), 0.66 mm and 0.7 mm (red), with medium range powers and very high electrical-optical conversion efficiencies, if compared with the respective values relating to gas laser sources such as Kr, Ar, HeCd etc.

The recent introduction of pumping with semiconductor laser diodes has considerably increased the overall efficiency of said solid state systems.

Since the efficiency of a second harmonic conversion process depends, roughly, on the square of the intensity of the generating beam, great advantage is obtained from placing a non linear crystal, that mediates the frequency conversion process, within the infrared laser cavity. Said intra-cavity frequency duplication technique, known as ICSHG (Intracavity Second Harmonic Generation), was proposed in the early Sixties and, since then, it has been used in numerous devices.

The most efficient solid state laser systems with ICSHG currently available on the market emit green radiation with power levels of several Watts, are diode pumped and mainly use the active material Nd³⁺:YVO₄ at the fundamental wavelength of 1064nm. The publication *Magni et aliis*, Opt. Lett **18,** 2111,1993 discloses the use of a cavity with a length of a few tens of cm to limit the noisiness of the conversion process, which is thus characterised by considerable diffractive losses.

To contrast the effect of the linear losses of the resonant cavity, which tend to reduce the infrared power circulating in the cavity, the use is known of an active material with very high gain, such as Nd³⁺:YVO₄. Moreover, the efficiency of the frequency conversion process is high thanks to the strong focussing of the infrared beam at a wavelength of 1064 nm in a non linear crystal of LiB₃O₅ (Lithium Triborate, known as LBO); since, usually, the physical process of tuning the propagation velocity of the infrared and visible beams in the non linear crystal, which allows the efficient conversion, called phase matching, is highly sensitive to the angle of incidence of the beam on the non linear crystal and to the angular distribution of the beam, such a marked focussing is possible only using so-called *non critical* phase matching, i.e. not sensitive to the angular distribution of the beam to be duplicated, condition that is reached by heating the LBO crystal to the approximate temperature of 160°C for the duplication process from a wavelength of 1064 to 532 nm.

Clearly, a system thus obtained, though highly efficient, does have some intrinsic limitations.

Prior art solutions achieve optimal performance using laser cavities of considerable dimensions, which are ill suited to integration in systems requiring small component size (e.g., aerospace applications).

Use of a non linear crystal in non critical phase matching requires the presence of a heating element that is bulky and energetically disadvantageous as well as penalising in terms of reliability because of the heating/cooling cycle undergone by the non linear crystal when the system is powered on and off.

Moreover, prior art solutions do not allow to generate the wavelengths of primary interest with high efficiency from a same structure of the laser apparatus. In particular, diode pumped solid state laser sources, able to provide blue or red light with powers exceeding one Watt are not available on the market, with the exception of complex Mode Locking sources, nor are available, above all, laser sources having a common cavity structure for all wavelengths.

Additionally, prior art embodiments of solid state laser systems with ICSHG are characterised by a considerable set-up complexity and are highly sensitive to variations in parameters such as resonator alignment, room temperature, pump power.

The object of the present invention is to provide a solution that allows to produce laser beams at visible wavelength with power in the order of, or exceeding, one Watt, and with high spatial quality of the beam.

According to the present invention, said object is achieved by a laser apparatus having the characteristics specifically set out in the appended claims.

Briefly, the proposed solution comprises an apparatus for producing a visible laser beam, obtained by frequency duplication in the cavity of an infrared laser generated by a diode pumped solid state discrete element laser, functionally based on the combined use of a miniaturised cavity structure, of an active material with polarized emission, such as Nd:GdVO₄ or Nd:YLF or Nd:YVO₄, with small thermal aberration gain configuration for the cavity mode, of the non linear crystal LiB₃O₅ (or YCOB or GdCOB) in type I critical phase matching, and a system for regulating/removing the heat of the entire cavity.

Additional aims, characteristics and advantages of the present invention shall become readily apparent from the detailed description that follows and from the accompanying drawings, provided purely by way of explanatory and non limiting example, in which:
- Figure 1 is a schematic view of the laser apparatus according to the invention, projected on the polarization plane p of the cavity radiation;
- Figure 2 shows the values of the thermal aberration of three laser materials usable in the laser apparatus of Figure 1, with variations in absorbed pumping power;
- Figure 3 shows the value of the thermal focal length of three laser materials usable in the laser apparatus of Figure 1, with variations in absorbed pumping power;
- Figure 4 shows the values of the thermal aberration losses of the laser material Nd:GVO, with variations in doping, in single and double step pumping scheme;
- Figure 5 shows the values of the thermal focal length of the laser material Nd:GVO with variations in doping, in single and double step pumping scheme;
- Figure 6 shows the typical dependence of thermal aberration diffraction losses on the overlapping ratio between the pump beam and the laser beam.

The inventive idea substantially is based on the use of a cavity structure and of optical elements that minimise the optical losses of the resonator at the infrared wavelength and allow it to operate at very high efficiency, and on performance stabilisation thanks to the thermal control of the system; said infrared wavelength constitutes the so-called fundamental wavelength, in relation to the "second harmonic" wavelength in the visible range, which is obtained in the ICSHG process. As shall be shown in the following, this provides high efficiency of the ICSHG process without adding any additional complexity to the system.

Knowing the mathematical models that describe the ICSHG phenomenon, one can observe that the efficiency of the conversion process closely and strongly depends on the percentage of losses of the laser cavity at the fundamental infrared operation wavelength. The term 'optical losses' means the percentage of power circulating at the fundamental wavelength which is dispersed in one cavity pass; said value does not include the percentage of circulating power converted into second harmonic. Said losses compete with the ICSHG process itself in the extraction of power from the cavity; in a typical cavity with a length of a few tens of cm, the percentage of circulating infrared power converted into second harmonic is often in the same order of magnitude as the percentage that is dispersed due to the diffraction losses of the cavity itself. If optical loss phenomena deprive the resonator of circulating power, then said power is no longer available for the second harmonic generation process; the proposed solution therefore provides for the laser system has no losses for the fundamental frequency, and couples only the second harmonic generated with the exterior.

Infrared losses depend mainly on some concomitant factors, on the attenuation whereof is centred the basic concept of the apparatus of the invention:
- imperfect reflectivity of the cavity mirrors, and imperfect transmission of the optical elements within the cavity (for example dielectric antireflecting coatings of the laser crystal and of the non linear crystal);
- imperfect transparency of the laser crystal and of the non linear crystal at the fundamental and at the second harmonic wavelength;
- diffraction losses of the laser resonator;
- non polarized emission of the active medium;
- thermal aberration losses induced by pumping, in the propagation of the laser mode through the active medium;
- any losses in propagation through the active medium, due to parasitic phenomena (e.g. excited state absorption).

The device according to the invention comprises a miniaturised cavity structure, comprising crystals and thermostating means which allow to minimise infrared losses and maximum the optical efficiency of the system operating the ICSHG, whilst entailing the desired flexibility in the generation of different wavelength, and the compactness, simplicity, robustness and energy efficiency of the laser head.

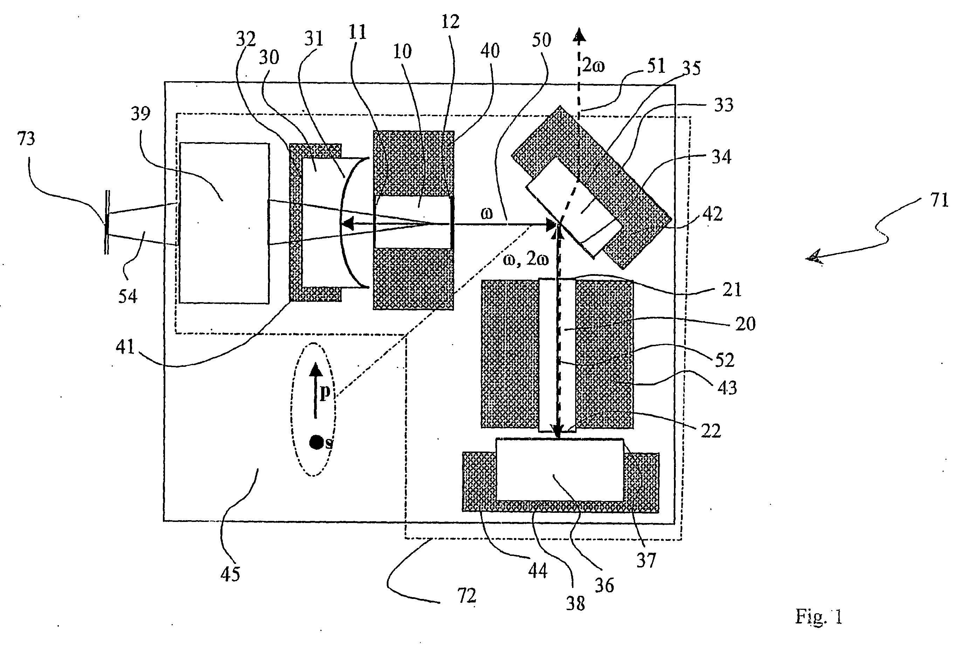

Figure 1 shows a schematic diagram of a laser apparatus 71 according to the invention.

Said device 71 substantially comprises a laser cavity 72, on which impinges a pumping beam 54 generated by an external source 73.

In said laser cavity 72. or resonator the pumping beam 54 initially meets a pumping mirror 30 provided with a face 32, transparent to pumping, and with a face 31 reflecting towards the interior of the cavity 72, then meets a first face 11 of an active crystal 10. In the active crystal 10 the pumping beam 54 generates a laser beam 52 at fundamental wavelength which projects from a second face 12 of the active crystal 10 and impacts on a deflecting dichroic mirror 33 which reflects the beam 52 towards the interior of the cavity 72 through a face 34. The beam 52, deflected by the dichroic mirror 33, then impacts on the first face 21 of a non linear crystal 20, exiting therefrom through a second face 22 to be reflected by the face 37 of a bottom mirror 36. Said mirror 30, 33, 36 define an optical axis of the cavity 72, i.e. an optical axis 50 of propagation of the laser beam 52 at fundamental wavelength. Said laser beam 52 thus oscillates in the cavity 72 from the pumping mirror 31, through the dichroic mirror 33, to the bottom mirror 36, then again passing on the dichroic mirror 33, to the pumping mirror 31. During said oscillation, in the passage of the laser beam 52 to a frequency w through the non linear crystal 20, by second harmonic generation a visible beam 51 is generated with doubled frequency 2w with respect to the frequency w of the infrared laser beam 52, which projects through dichroic mirror 33, traversing its face 34 and a face 35 oriented towards the exterior of the cavity 72.

The optical axis 50 of the infrared cavity 72, as is readily apparent from Figure 1, therefore takes a "v" or "L" appearance according to the angle of incidence of the laser beam 52 on the dichroic mirror 33, said incidence angle being able to vary in a range between 0.1° and 80°. The optical axis 50 of the resonator 72 lies in a plane, relative to which are defined polarizations "p" and "s" of the laser beam 52 propagating in a parallel direction to said plane: "p" designates a polarization direction parallel to said plane and perpendicular to the optical axis, "s" designates a direction perpendicular to "p" and perpendicular to the optical axis 50.

The mirrors 30, 33, 36 of the cavity 72 preferably constitute separate optical elements from the crystals 10 and 20, to assure the best possible realisation of the dielectric coatings, and the total alignment independence of the cavity 72 relative to the alignment of the non linear crystal 20 for the phase matching.

The mirrors 30, 33 and 36 have different functions, but they share the characteristic that the faces 31, 34, 37 have very high reflectivity at the fundamental wavelength of the laser beam 52 according to the polarization s. The fundamental operating wavelength of the laser is selected by appropriately choosing the dielectric coatings that constitute the faces 31, 34, 37 of the mirrors 30, 33, 36 and the faces 11, 12, 21, 22 of the crystals 10 and 20. An optimal and achievable value of the faces 31, 34, 37 of the mirrors 30, 33, 36 can be R>99.95% using for example dielectric coatings obtained by sputtering techniques. The choice of such coatings allows to obtain, for a complete pass in the cavity of the laser beam 52 with polarization s, a total loss of only 0.2%.

The device 71 comprises a structural base 45 made of copper or other metallic or ceramic material with good heat conduction characteristics, whereon are constructed the remaining elements of the device 71; the side of the structure 45 underlying the laser cavity 72 is realised in the manner of a well polished plane to allow an excellent heat exchange with an element with regulated temperature, such as a Peltier cell with active temperature control or a thermoregulated water exchanger.

The mirrors 30, 33 and 36 are mounted on respective supports 41, 42 and 44 which have good thermal contact with the structural base 45, so that the entire cavity 72 is a part of a same thermal circuit and temperature-stabilised: one thereby obtains a better mechanical stability and insensitivity to the misalignment caused by changes in external climatic conditions, as well as a marked frequency stability of the cavity.

Other desirable optical characteristics for the mirrors are:
- the pumping mirror 30 can have its reflecting face 31 treated with an appropriate layer that is antireflecting at the pumping wavelength (typically 800-808 nm or 879 nm) and antireflecting at one or more of the characteristic wavelengths of the laser crystal 10, where the system has to operate at a wavelength disadvantageous in terms of stimulated emission cross-section: if, for instance, the laser operates at 912 nm of fundamental wavelength, the pumping mirror 30 can be treated in such a way as to be antireflecting at 1064 and 1340 nm to assure the extinction of the laser action and of the super-fluorescence of said wavelengths because these phenomena compete with gain; the pumping mirror 30 can have the face 31 also with antireflecting treatment at the pump wavelength and/or at one or more wavelength of the active material whose resonance is to be prevented. One or both faces of said pumping mirror 30 can be planar or curved; in the construction of the apparatus, the face 31 is preferably concave, to produce a fundamental laser mode more focused in the non linear crystal 20 than in the active material 10. The pumping mirror 30 serves as a launch window for the pumping beam 54 in the active crystal 10, and at the same time it is able totally to reflect the fundamental laser beam 52. In a different embodiment, the pumping mirror 30 can be deposited directly onto the face of the active crystal 11, if this arrangement does not compromise the achievement of limited losses for the circulating radiation, for instance when pump power is limited within 5-10W or if the active crystal 10 is not very sensitive to thermal deformation, for example when Nd:YLF or other fluorides are used. In any case, this layer is required to have a reflectivity with characteristics equal to the one described above for a discrete element.
- the deflecting dichroic mirror 33 has the face 34 provided with a coating that is also antireflecting with respect to the second harmonic 51, "p" polarized (parallel to the plane in which the optical axis lies). The low reflectivity, e.g. R<2%, at the frequency of the second harmonic allows to extract the visible beam 51 generated in the crystal 20 by the cavity 72 without said beam impinging on the active crystal 10. The face 34 can also be antireflecting at one or more of the laser wavelengths whose resonance is not desired. The face 35 of the crystal 20 can be provided with a antireflecting layer for the second outgoing harmonic, "p" polarized. All dielectric coatings of the dichroic mirror 33 are constructed as a function of the exact angle of incidence, whereto it shall be positioned within a typical tolerance of +/- 1°. The dichroic mirror 33 can be constructed with one or both faces planar or curved;
- the bottom mirror 36 is provided on the reflecting face 37 with a dielectric layer that is highly reflecting also at the second harmonic (53), "p" polarised (R>99.8%), and possibly antireflecting at laser wavelengths whose resonance is not desired. A rear face 38 of the bottom mirror 37 can be provided with an antireflecting dielectric layer for the wavelength of the laser beam 52 whose resonance is not desired. The bottom mirror 36 can be constructed with one or both faces planar or curved.

It is obviously possible to increase or decrease the number of mirrors or, in general, the number of optics present in the resonator 72 to obtain more compact or efficient cavity designs, as long as the new elements introduce negligible optical losses. In a possible alternative embodiment, for example, only two mirrors may be used: a pump mirror, totally reflecting at the fundamental and second harmonic frequencies, and an output mirror, highly reflecting at the fundamental frequency and antireflecting for the second harmonic, allowing part of the second harmonic to traverse the active material before exiting the cavity.

The length of the cavity 72, i.e. the propagation distance of the fundamental light between the pump mirror 30 and the bottom mirror 36 is such as to define a miniaturised cavity. In the remainder of the description, the expression 'miniaturised cavity' shall mean a cavity whose length does not exceed ten times the sum of the lengths of the crystals 10 and 20 included in the resonator 72.

Since the diffraction losses of a resonating frequency generally grow as its length increases, the choice of a miniaturised cavity advantageously allows considerably to reduce said losses until reaching negligible values with respect to the other lossy elements of the resonator; moreover, the choice of a miniaturised cavity allows to obtain an extremely compact resonator with typical lengths of 5-10 cm and with a volume well below 50 cm³. These dimensions and volumes are comparable, for example, to those of a package of some electronic devices and cannot be found in the state of the art in a solid state laser with discrete components and emission powers of around one Watt or higher, characterised by structural robustness, and which, above all, can easily be sealed in an inert atmosphere, and temperature controlled.

It should be specified that the expression 'with discrete components' identifies a different cavity from laser micro-cavities obtained by integrated optics processes.

The pump beam 54 is provided, as stated, with an external source 73, which can be constituted by an optical fibre coupled array of power laser diodes, and which is focused longitudinally in the active crystal 10 through an appropriate optics 39 positioned before the pump mirror 30. In an alternative implementation, the pump beam can come from a laser diode source situated on the structural base 45 itself. The length of the cavity 72 is also chosen according to the dimension of the pump beam 54 in the active crystal 10, to increase the efficiency of the laser action at the fundamental wavelength by means of an appropriate overlapping between the laser mode and the pump beam 54; preferably, the length, together with other parameters of the resonator 72 can be chosen to allow the operation of the laser in the TEM_{0,0} mode, with a beam at the diffraction limit, to maximise the efficiency of the ICSHG process.

In proximity to the pumping mirror 30, and intersecting the optical cavity axis 50 and the direction of the pump beam 54, is the laser crystal 10, which can be obtained from an Nd:GdVO₄ crystal, cut according to the crystallographic axis a and oriented so that its crystallographic axis c coincides with the "s" polarization axis of the cavity 72. The laser crystal 10 houses in a mount 40 made of copper or other heat conducting material, which in turn is anchored to the structural base 45 to assure a good transmission of heat. Between the crystal 10 and the mount 40, adapting layers of Indium foil or other heat conductor materials form an efficient thermal interface.

The laser crystal 10 has the two faces 11 and 12 perpendicular to the optical axis 50 of the cavity 72, optically machined and provided with a dielectric coating with the following properties:
- the face 11 proximate to the pump mirror 30 is antireflecting at the fundamental infrared wavelength, with losses that should be lower than 0.1% and preferably in the order of 0.05%, and possibly with high transmission for the pump beam 54 which, traversing the face 11, enters the laser crystal 10 pumping it longitudinally.
- the face 12 opposite to the face 11 is antireflecting at the fundamental infrared wavelength, with losses that should be lower than 0.1% and preferably in the order of 0.05%.

In a preferred version of the laser apparatus according to the invention, the face 12 is antireflecting at the fundamental infrared wavelength, with losses that should be lower than 0.1% and preferably in the order of 0.05%, and possibly at high reflectivity for the pump beam 54 which, not wholly absorbed in the laser crystal, can be sent back to traverse the laser crystal 10 for a second absorption process along the pump channel obtained in the first passage. For this purpose, the laser crystal 10 must be oriented in the resonator with the face 12 perpendicular or aligned within 2° to the direction of the pump beam 54, and the direction of the beam must overlap at the best the optical axis of the resonator 50.

In proximity to the bottom mirror 36 is positioned the non linear crystal 20, mediating of the ICSHG process. The material chosen for the non linear crystal 20 is an LBO, i.e. a crystal of Lithium Triborate, LiB₃O₅, whose characteristics are known, for example, from the publication *Chen et aliis,* JOSA B,**6**,1989, p. 616 et seq. Said non linear crystal 20 is 10-15mm long, cut for type I critical phase matching at the operating wavelength of the laser device 71; instead of using the non linear material LBO, it is possible to utilise the non linear crystal YCOB or GdCOB, whose properties are compatible with those set out for Lithium Triborate.

The faces 21 and 22 of the non linear crystal 20, positioned to intersect the optical cavity axis 50, are optically machined and both provided with a dielectric coating that is antireflecting at the fundamental infrared wavelength, with losses that should be lower than 0.1% and preferably in the order of 0.05%, and simultaneously antireflective for the second harmonic, with losses that should be lower than 0.5% and preferably in the order of 0.05%.

The crystal 20 receives the laser beam 52 at the fundamental wavelength and "s" polarized, through the face 21 and, only if it is angled correctly with respect to the cavity propagation axis 50, can transform two infrared photons into a visible photon, achieving frequency duplication. The residual infrared radiation belonging to the laser beam 52 and the generated visible radiation 51 exit the non linear crystal 20 through the face 22, and are both reflected, by the bottom mirror 36, back into the interior of the crystal 20 along the outgoing path. In the non linear crystal 20, the conversion process continues in the second passage through, at least partly stimulated coherently by the second harmonic generated at the first step. The infrared residue of the laser beam 52 and the visible beam 51 exit the face 22, and the visible beam 51 generated in the two passages is almost totally extracted from the cavity through the dichroic mirror 33. The infrared residue of the laser beam 52 is instead reflected by the dichroic mirror 33 in the active crystal 10, to be amplified to the initial value.

With the entire structure of the cavity 72 anchored at a predetermined temperature (with typical accuracy better than 0.1°C with respect to the nominal set temperature or set point), the non linear crystal 20 is oriented in cavity until the second harmonic conversion is maximised; since this orientation is sensitive to the temperature of the crystal, a mount 43 that houses the non linear crystal 20 of LiB₃O₅, made of a heat conducting material, such as copper, aluminium or others, and whereto the crystal 20 itself is fastened by means of thermal interface materials such as Indium foils or equivalent heat conductors, is fastened with a good thermal contact to the structural base 45 effectively stabilising the temperature of the crystal 20 and locking it to the temperature of the base 45. As mentioned above, locking to the temperature of the base 45 an element, in particular the non linear crystal 20 through its mount 43, means that the temperature profile of the non linear crystal 20 is linked to that of the base and hence no independent adjustments and independent heaters and/or coolers are necessary to obtain temperature stabilisation. However, it is readily apparent that, depending on the heat resistance and capacity of the elements fastened to the base 45 the stabilised temperatures reached may be different, even if their profile over time remains substantially correlated through the base 45.

In the step of setting up the laser device 71, small variations of the temperature of the base 45 can be imposed, around the set point value, to further optimise the ICSHG process: with this operation, the small differential variation in the index of refraction with respect to temperature is exploited to obtain an even more accurate phase matching. As a result of this procedure, the entire cavity 72, including the elements of the resonator and the laser crystal, is thermostated at the temperature that guarantees the optimum ICSHG process. In this configuration, the laser system operates correctly only when the cavity 72 is thermostated at the predetermined temperature value. Alternatively, if the system requires different temperatures for the laser crystal and the non linear crystal, or the operating temperature of the non linear crystal 20 has to be regulated with better dynamic precision with respect to that of the base 45, the cavity structure can be altered by providing the non linear crystal 20 with an additional autonomous temperature regulating device, such as a heater or a Peltier cell that uses the base 45 of the system as a heat sink, and imposes a predetermined temperature differential with respect thereto. Doubling the temperature sensors, respectively providing one for the non linear LBO crystal 20 alone and one for the base, it is thereby possible to keep locked the temperatures of the two crystals, active crystal 10 and non linear crystal 20, while setting them to different values.

The described laser cavity 72 is able to generate with great efficiency a visible laser beam; in particular, it is possible to transform more than 20% of the optical pump power into power of the visible laser beam. For example, 2.5W of radiation at a wavelength of 670nm (red) are generated using 9.2 W of absorbed pump, and 4.5W of radiation at a wavelength of 532nm (green) are generated using less than 20W of absorbed pump.

The choice of active materials such as Nd³⁺:GdVO₄ (Neodymium doped Gadolinium Orthovanadate, also called Nd:GVO), Nd:YLF (Neodymium doped Yttrium and Lithium Fluoride) or possibly Nd YVO₄ (Neodymium doped Yttrium Orthovanadate) depends on the elements described hereafter, and more in particular, on the original and innovative method for selecting the active material according to the criterion of minimising losses of thermal origin, while preserving high laser gain, because said thermal losses are the most important parasitic coupling component of the fundamental radiation.

The aforementioned materials emit linearly polarized laser light; this element is fundamental, since only a precise linear polarization of the fundamental frequency undergoes the SHG process in a non-linear crystal. A material with this characteristic does not require the insertion of a polariser in cavity (thus providing no additional Fresnel losses) and above all it does not undergo any losses due to depolarization of thermo-mechanical origin, as occurs, for example, with the use of Nd:YAG combined with a polariser in cavity (thermal birefringence phenomenon).

Nd:GVO, Nd YLF and Nd:YVO have intense emission lines around 0.9, 1, 1.3 mm wavelength, suitable for generating blue, green and red light ICSHG, and are optimally transparent at the fundamental wavelengths (except in transitions around 900 nm), but discretely absorbent in some visible wavelengths, so it is preferable to separate the second harmonic by means of the dichroic mirror 33 before it reaches the laser crystal 10. Parasitic absorption phenomena are very limited for all fundamental transitions.

Thus, said high laser gain materials, adequate for ICSHG, are particularly suitable to obtain a gain configuration with small thermal aberration for the cavity mode, for high absorbed pump powers.

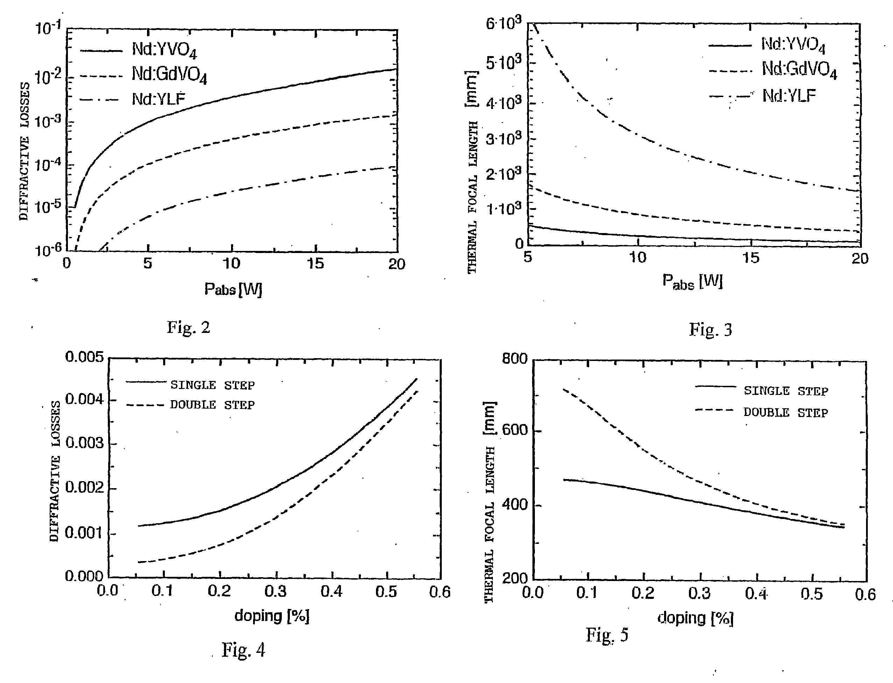

The phenomenon of the aberration losses associated to the "thermal lens" is well known and described in the literature. An active material that absorbs a pumping beam whose section is comparable to the section of the cavity mode, exhibits to the cavity mode propagation inside it a transverse profile of temperature and refraction index variation that is approximately parabolic with approximately logarithmic tails. Whilst the parabolic component has the effect of a lens ("thermal lens"), the logarithmic component generates losses due to phase front aberration on the laser mode. The extent of these losses for pump powers between some Watt and some tens of Watts is very large, and it can represent the greatest contribution of optical loss in the whole laser cavity for ICSHG. Applying recently developed mathematical models such as those described in the documents *Y.F. Chen et al.*, IEEE J. of Quantum Electron. 33, 1424-1429, 1997, and *Agnesi et al.* in Opt.Comm.212, 371-376, 2002, it is possible to estimate the extent of the losses due to phase front aberration for some particularly interesting active materials such as, by way of non limiting example, Nd:YVO, Nd:GVO, Nd:YLF. Figure 2 is an example of this estimation as the pump power absorbed in the crystal varies, and assuming in all three cases a crystal length of 9 mm with a total absorption of incident pump light of 90% (situation of equal thermal load per length unit).

The calculation formulated by way of example assumes a radius Wₚ of the pumping beam of 0.3 mm and a dimension of the laser mode of 0.8 Wp. It is readily apparent that the material with by far the smallest aberration losses is Nd:YLF whose practical use, however, is hampered by a low refraction index (which does not allow to confine effectively the pumping beam), but above all by poor thermo-mechanical properties, which jeopardise its use with high absorbed pump powers. It has been experimentally verified that numerical analysis instead tends to overestimate the behaviour of Nd:GdVO₄ with respect to Nd:YVO₄, traditionally used for ICHSG applications. Using these two materials in a comparison with equal experimental conditions, the difference in the quantity of thermal aberration losses does not seem marked as predicted by numerical results.

The very limited extent of the losses, shown in Figure 2, presupposes the use of a reduced doping (about 0.3% at. Nd³⁺) optimised to reduce phase front aberration losses; it is also observed that the extent of the losses closely depends on the employed parameters, and it can easily worsen even by one order of magnitude with an inappropriate selection of design parameters. When using a two-step pumping scheme (which allows, for equal crystal length and total absorbed power, to reduce Nd³⁺ atomic doping), very low absolute aberration losses can be obtained. Figure 4 shows the dependence of heat aberration losses on the doping of the Nd:GdVO₄ crystal, for equal absorbed power (20W), in single and double pumping step (thus increasing the length of the crystal as doping decreases and, for each doping, halving it in the case of double step). It is readily apparent that the decreased doping entails a considerable reduction in losses; the useful doping interval for Nd:GdVO₄, and equally for Nd:YVO₄, in this application ranges from about 0.05% to 0.6% at. Nd³⁺, according to the characteristics of the laser transition employed, and on the spatial quality of the pumping beam in use.

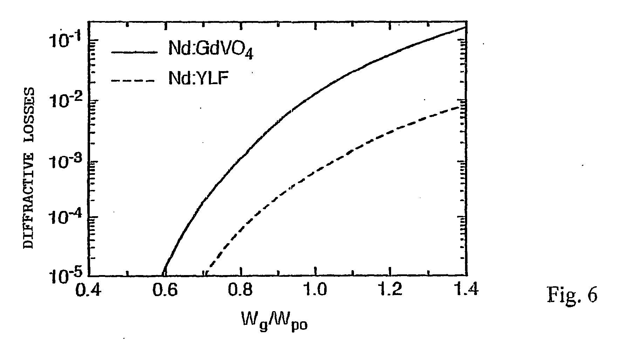

Figure 6 shows that the extent of the diffractive losses due to thermal effects depends on the characteristics of overlapping of the oscillating laser mode with the pumping beam; in particular, the figure shows a qualitative profile for the Nd:GVO and Nd:YLF crystal, with changes in the ratio between w_{g}, Gaussian radius of the fundamental mode TEM_{0,0} and Wₚ₀, equivalent radius of the pumping focus, in the crystal; in the example, Wₚ₀= 0.3mm, and absorbed pump power is 20W. It is also readily apparent that the value of aberration losses of thermal origin undergone by the fundamental mode TEM_{0,0} as it traverses the active material decreases as the value of Wₚ₀ increases; experiments performed by the Applicant clearly show that, using the active material Nd:GdVO₄, it is possible to exploit very low values of the ratio w_{g}/Wₚ₀ (between 0.7 and 1) although the resonator oscillates only on the fundamental mode TEM_{0,0}. In the same conditions, the Nd:YVO4, characterised by a greater laser gain, produces a slightly multi-modal oscillation, less suitable for the ICSHG process. By enabling the efficient generation of a TEM_{0,0} beam with a lower value of aberration losses, the use of Nd:GVO can be deemed advantageous with respect to the use of Nd:YVO in the apparatus of the invention.

Knowing the characteristics of the pumping beam, it is possible to determine the pumping geometry, the type, length and doping of the active material, the optical structure and the length of the miniaturised cavity that minimise optical losses by thermal aberration.

If the pumping beam has high spatial quality or power lower than 10W, instead of Nd:GdVO₄ and Nd:YVO₄ it is possible to use Nd YLF, reducing the total value of losses in the resonating cavity; it is also possible, in all cases, further reduce thermal aberration losses, drastically reducing the heat deposited in the active material by the pumping beam, by using pump light with wavelength in the band 860-890 nm instead of the conventional band 790-820 nm; the heat dissipated in the crystal is mainly originated by the so-called "quantum defect", i.e. by the difference in energy between a pump photon and the laser photon that originates, which, used for non radiant energy transitions, is dispersed as heat inside the pumped region. The quantum defect for the transition to 1064nm pumped at 808nm is equal to 1-808/1064=0.24. Pumping at 879nm, the defect is reduced to 1-879/1064=0.17, i.e. about 70% of the previous case.

Figures 3 and 5 (in comparison between the different materials and, in the case of Nd:GVO, with single or double pump step with variable doping), show qualitative profiles of the thermal focal length of Nd:GdVO₄, Nd:YLF and Nd:YVO₄ in multi-watt pumping conditions; the dioptric power of the thermal lens is in no case sufficient to compromise the stability of a miniaturised optical resonator.

The choice of the non linear LBO material is based on some considerations, set out below:
- transparency is among the best ones available for a non linear crystal, and extends from wavelengths of 160 nm to 2600 nm; this allows to minimise absorption losses inside the crystal, both for the fundamental frequency, and for the second harmonic, according to the main indication of the invention to minimise optical losses for the fundamental, warelength and allowing the total extraction of the second harmonic generated;
- the properties of the material are excellent for the ICSHG process, with a high non linear coefficient, high angular acceptance and low walk-off, high damage threshold, high resistance to environmental factors (low hygroscopicity), absence of photo-refractive damaging (essential for applications of high mean power in which otherwise advantageous crystals such as KTP are unreliable), ability to obtain phase matching throughout the interesting spectrum of wavelength (from 0.55 to 2.6 microns of wavelength of the fundamental) using type I phase matching, in which two fundamental photons polarized on one of the main axes of the crystal are converted into a second harmonic photon polarized in the perpendicular axis.

It is important to not that, although the LBO does not provide the best performance in absolute terms with the ICSHG process, it is perhaps the strongest non linear crystal for this type of application, and therefore it is the best choice for a laser system that must provide long term reliability.

An innovative element consists of the choice to employ, for all fundamental wavelengths of interest, the LBO crystal for the SHG process in the type I duplication scheme that is critical, i.e. dependent on the angle. The advantage is well known of employing, in an SHG process, a non linear crystal with phase matching that is *not critical,* i.e. does not depend on the angular distribution of the fundamental beam, and without walk-off, i.e. the spatial uncoupling between first and second harmonic in traversing the crystal, due to the bi-refringent nature of the material.

In these conditions, the fundamental beam can be strongly focused in the non linear material with such intensities as to make the conversion process high efficient; in addition, the length of the non linear material need not be subject to particular constraints, tied to the propagation of the fundamental. It is also known that in the LBO crystal, non critical type I phase matching at the main wavelengths of (by way of non limiting example) Nd:GdVO₄ of 912, 1064 and 1340nm can be obtained by bringing the crystal to the (approximate) temperatures of 250°C, 160°C, 0°C. However, such temperatures require the presence in the cavity of a cell whose temperature is regulated at the above indicated values, thermally insulated (to minimise the heating effect of the surrounding components), and, in the case of 0°C, also sealed in a dry atmosphere to prevent the condensation of water vapour on the surfaces, this latter characteristic not being compatible with the obtainment of a compact resonator to limit optical losses, and of an energy-efficient system.

It is instead proposed to employ, for all fundamental wavelengths of interest, an LBO crystal in type I critical phase matching condition, which can always be reached at room temperature, using a non linear crystal cut according to specific directions with respect to the crystallographic axes, based on the specified operating temperature. The walk-off phenomenon of the fundamental beam is greatly reduced through an appropriate selection of the size of the cavity mode inside the non linear crystal, so that the walk-off angle remains contained within the divergence of the beam. This necessarily entails that the length of the non linear crystal (and thus the quantity of total non linear effect) is chosen as a function of the desired focussin, with an accurate design of the resonating cavity and of the length of the LBO crystal, the efficiency of conversion into second harmonic can thus be made slightly lower than the one obtainable using an LBO crystal in non critical phase watching.

The choice of a type I critical phase matching is particularly advantageous for fundamental wavelengths of between 1.2 and 1.4 micron; in this range, phase matching is spontaneously nearly non critical even at room temperature, with obvious advantages in the conversion process.

The temperature-regulated base 45 serves a multiplicity of essential functions for the efficient operation of the laser system, justifying its originality of construction. They can be summarised in the advantages described below.

The temperature of the entire base, and of the seat of the LBO crystal, is determined a priori, and the LBO crystal in type I critical phase matching is aligned on the basis of said temperature, and kept at the correct operating temperature, within an error of 0.1°C or less (assuring the maximum second harmonic conversion efficiency); in particular, the temperature regulation process occurs in negative feedback, with a sensor (NTC, platinum probe or others) positioned in proximity to the LBO crystal itself. Small adjustments in the temperature set point allow to optimise the ICSHG once the crystal is aligned nearly optimally.

The temperature-regulated base 45 removes the parasitic heat load inside the laser crystal. The laser crystal is mounted in a thermally conductive structure 40, so that the lateral surfaces of the material can be kept locked in temperature to the base. The thermal interface between the crystal and the base is assured by an appropriate adapting material such as Indium foil or the like. The base 45 removes from the laser crystal 10 the pump power that is absorbed and converted into heat through the thermal decay processes. The loss of fluorescence from the laser crystal is also reabsorbed by the walls of the structure, and removed as heat in the temperature-regulation process. When, in particular, the laser operates at wavelengths in the 800-950 nm region, the lower energy level of the laser transition is located in the multiplet ⁴I_{9/2} comprising the energy ground state; consequently, the lower level of the transition is populated according to the absolute temperature at the material, with the emergence of losses due to laser light re-absorption in what is commonly called a "three-level quasi transition". In this case, it is beneficial to regulate the entire base 45 at a rather low temperature (e.g. 7-10°C) to reduce the losses due to the thermal population of the ground state; the LEO crystal is oriented for a correct phase matching at this temperature.

Due to the energy conservation principle, all the power delivered to the system, not transformed into light emitted by the cavity, is transformed into heat inside the system itself. The base 45 dissipates the heat, keeping the temperature of the components within it constant and as uniform as possible.

The optical components of the cavity are fastened to the base with structures that conduct heat well: therefore, the cavity does not undergo any thermal expansion phenomenon with respect to the original regulation condition, with great advantage in the preservation of the general alignment of the resonator and also on the frequency stability of the laser emission.

Moreover, previous empirical observations show that the temperature regulation of the laser crystal and of the non linear crystal, together with a favourable alignment of the non linear crystal relative to the cavity axis, within the phase matching angular tolerance, minimise the noise phenomena in the ICSHG process, with no need, for this purpose, to select a single longitudinal mode; in the apparatus of the invention, the thermally conductive base mutually locks the temperatures of the two crystals, i.e. laser crystal 10 and non linear crystal 20, with far better precision than in the case of an individual control of their respective temperatures.

From the above description, the characteristics of the present invention are thus readily apparent, as are its advantages.

Advantageously, the described device generates laser beams whose power is in the order of, or exceeds, one Watt with great efficiency, exceeding 20% of optical/optical conversion, at wavelengths that potentially cover the entire visible spectrum from blue/violet to red.

Moreover, advantageously the device generates said beams using a unified cavity structure, usable for all wavelengths of interest through the simple replacement of the optics and of the crystals as needed. To obtain a different wavelength, dielectric coatings can be replaced, i.e. the entire set of optics and crystals, although the optical,materials remain unchanged (e.g. type I critical Nd:GVO+LBO).

Additionally, advantageously, the described apparatus achieves full functionality with the synergetic use of a cavity with very low losses, miniaturised, sealed and completely thermostated, of the active material Nd:GdVO₄ (or Nd:YLF or Nd:YVO₄), and of the non linear crystal LBO (or YCOB or GdCOB) with type I critical phase matching.

Clearly, numerous variants are possible, for those skilled in the art, to the diode pumped laser apparatus for generating a visible power beam, of the type described as an example herein, without thereby departing from the principles of novelty inherent in the inventive idea, and clearly in its practical embodiment the forms of the illustrated details may be different, and said details may be replaced with technically equivalent elements.

## Claims

1. A diode pumped laser apparatus for generating a visible power beam, of the type comprising:
- a linear laser cavity (72), (whose length does not exceed ten times the sum of the lengths of the crystals included in the resonator,) comprising at least the following discrete optical elements (30,33,36,10,20):
- reflecting means (30;33;36) that are highly reflective at a fundamental wavelength of a laser beam (52) generated by said cavities (72), at least one of said reflecting means (30) being traversed by a pumping beam (54), at least one of said reflecting means (36) being reflecting at said fundamental wavelength and a second harmonic wavelength (51) with respect to said fundamental wavelength and at least one of said reflecting means (33) being highly transmissive at said second harmonic (51) of said fundamental wavelength;
- an active material (10) with linear polarized emission, said active material (10) being able to generate said laser beam (52) at a fundamental wavelength;
- a non linear crystal (20), inside said cavity (72);
**characterised in that**:
said non linear crystal (20) is able to generate a second harmonic (51) of said fundamental wavelength by critical type I phase matching and that
said cavity (72) is associated to thermostating means (45;41;42;43;44) for temperature locking said cavity (72) and its optical elements (30,33,36,10,20),

2. An apparatus as claimed in claim 1, **characterised in that** said active material (10) is arranged to keep the aberration losses at less than 2%.

3. An apparatus as claimed in one or more of the previous claims, **characterised in that** said cavity (72) and the optical means (30,33,36,10,20) which it comprises are arranged to minimise optical losses.

4. An apparatus as claimed in one of the previous claims, **characterised in that** said cavity (72) and said optical means (30, 33, 36, 10, 20) are arranged to keep said optical losses at said fundamental wavelength at less than 2%.

5. An apparatus as claimed in one of the previous claims, **characterised in that** said cavity (72) and said optical means (30, 33, 36, 10, 20) are arranged to keep said optical losses at said fundamental wavelength due to thermal aberration at less than 1%.

6. An apparatus as claimed in one of the claims from 1 through 5, **characterised in that** the active material (10) is a crystal of Nd:GdVO₄.

7. An apparatus as claimed in one of the claims from 1 through 5, **characterised in that** the active material (10) is a crystal of Nd:YLF.

8. An apparatus as claimed in one of the claims from 1 through 5, **characterised in that** the active material (10) is a crystal of Nd:YVO4.

9. An apparatus as claimed in one of the claims from 6 through 8, **characterised in that** the non linear crystal is LBO.

10. An apparatus as claimed in one of the claims from 6 through 8, **characterised in that** the non linear crystal is YCOB or GdCOB.

11. An apparatus as claimed in one of the previous claims, **characterised in that** said resonator is arranged to allow the operation of the laser in the TEM_{0,0} mode.

12. An apparatus as claimed in one of the previous claims, **characterised in that** the pumping beam (54) is absorbed in two successive passes through the active material (10).

13. Apparatus as claimed in one of the previous claims, **characterised in that** said thermostating means (45;41;42;43;44) for temperature locking said cavity (72) and its optical elements comprise a mechanical structure (45;41;42;43;44) associated to said cavity (72).

14. Apparatus as claimed in claim 13, **characterised in that** said mechanical structure comprise a structural base (45), and elements for supporting the optics (41;42;43;44).

15. Apparatus as claimed in claim 13 or 14, **characterised in that** said structural base (45) and elements supporting the optics (41;42;43;44) are made of copper or other heat conducting material and associated in thermal contact with each other.

16. An apparatus as claimed in one of the claims from 13 through 15, **characterised in that** the temperature of the structural base (45) is regulated by means of an active system.

17. An apparatus as claimed in one of the claims from 13 through 16 **characterised in that** said mechanical structure (45;41;42;43;44) has the shape of a container, containing said cavity (72) in sealed way.

18. Apparatus as claimed in one of the previous claims, **characterised in that** said thermostating means (45;41;42;43;44) comprise an additional autonomous heat-regulating device to stabilise the temperature of the non linear crystal (20) in autonomous and more precise way than the other elements of the cavity.

19. Apparatus as claimed in at least one of the previous claims, **characterised in that** the reflecting means (30;33;36) are at least in part obtained by means of reflecting depositions on the laser crystal (10) and/or on the non linear crystal (20).

20. A method for generating a visible laser beam in an apparatus according to one or more of the preceding claims, said apparatus comprising a laser cavity (72) of the type whereby a non linear crystal (20) is inserted into said laser cavity (72) to obtain said visible laser beam (51) through a second harmonic generation operation, **characterised in that** it comprises the following operations:
- selecting a non linear crystal (20) cut for critical type I phase matching;
- aligning said non linear crystal (20) at a temperature predetermined by the thermostating means (45) associated to said cavity (72) obtaining the phase matching condition
- optimising the conversion into second harmonic with additional small temperature adjustments around the predetermined value.

21. Method as claimed in claim 20, **characterised in that** the temperature regulation operation occurs in negative feedback, detecting the signal of a sensor positioned in proximity to the non linear crystal.

22. A method as claimed in claim 20 or 21, **characterised in that** it further comprises the operations of:
- reducing the walk-off of the fundamental laser beam (52) operating on the dimension of the cavity mode inside the non linear crystal (20), in order to contain the walk-off angle inside the divergence of the beam;
- selecting the length of the non linear crystal as a function of the desired focussing.

## Patentansprüche

1. Diodengepumpte Laservorrichtung zur Erzeugung eines sichtbaren Leistungsstrahls, von dem Typ, der Folgendes umfasst:
- eine lineare Laserkavität (72), deren Länge das Zehnfache der Summe der Längen der in dem Resonator enthaltenen Kristalle nicht überschreitet und die mindestens die folgenden diskreten optischen Elemente (30, 33, 36, 10, 20) umfasst:
- Reflexionsmittel (30, 33, 36), die bei einer Grundwellenlänge eines mittels der Kavitäten (72) erzeugten Laserstrahls ein hohes Reflexionsvermögen aufweisen, wobei mindestens eines der Reflexionsmittel (30) von einem Pumpstrahl (54) durchquert wird, mindestens eines der Reflexionsmittel (36) bei der Grundwellenlänge und der Wellenlänge der zweiten Harmonischen (51) in Bezug auf die Grundwellenlänge reflektierend ist und mindestens eines der Reflexionsmittel (33) bei der zweiten Harmonischen (51) der Grundwellenlänge eine hohe Durchlässigkeit aufweist;
- ein aktives, linear polarisiert emittierendes Material (10), das fähig ist, den Laserstrahl (52) der Grundwellenlänge zu erzeugen;
- einen nichtlinearen Kristall (20) im Inneren der Kavität (72);
**dadurch gekennzeichnet, dass**
der nichtlineare Kristall (20) fähig ist, eine zweite Harmonische (51) der Grundwellenlänge durch kritische Typ-I-Phasenanpassung zu erzeugen, und dass
der Kavität (72) Temperaturregelungsmittel (45, 41, 42, 43, 44) zugeordnet sind, um die Temperatur der Kavität (72) und ihrer optischen Elemente (30, 33, 36, 10, 20) zu halten.

2. Vorrichtung nach Anspruch 1, **dadurch gekennzeichnet, dass** das aktive Material (10) so beschaffen ist, dass die Verluste durch Abberation unter 2 % sind.

3. Vorrichtung nach einem oder mehreren der vorhergehenden Ansprüche, **dadurch gekennzeichnet, dass** die Kavität (72) und die optischen Mittel (30, 33, 36, 10, 20), die sie umfasst, so beschaffen sind, dass Intensitätsverluste auf ein Minimum reduziert sind.

4. Vorrichtung nach einem der vorhergehenden Ansprüche, **dadurch gekennzeichnet, dass** die Kavität (72) und die optischen Mittel (30, 33, 36, 10, 20) so beschaffen sind, dass Intensitätsverluste bei der Grundwellenlänge unter 2 % gehalten halten werden.

5. Vorrichtung nach einem der vorhergehenden Ansprüche, **dadurch gekennzeichnet, dass** die Kavität (72) und die optischen Mittel (30, 33, 36, 10, 20) so beschaffen sind, dass die bei der Grundwellenlänge infolge von thermo-optischer Aberration auftretenden Intensitätsverluste kleiner als 1 % sind.

6. Vorrichtung nach einem der Ansprüche 1 bis 5, **dadurch gekennzeichnet, dass** das aktive Material (10) ein Kristall aus Nd:GdVO₄ ist.

7. Vorrichtung nach einem der Ansprüche 1 bis 5, **dadurch gekennzeichnet, dass** das aktive Material (10) ein Kristall aus Nd:YLF ist.

8. Vorrichtung nach einem der Ansprüche 1 bis 5, **dadurch gekennzeichnet, dass** das aktive Material (10) ein Kristall aus Nd:YVO4 ist.

9. Vorrichtung nach einem der Ansprüche 6 bis 8, **dadurch gekennzeichnet, dass** der nichtlineare Kristall LBO ist.

10. Vorrichtung nach einem der Ansprüche 6 bis 8, **dadurch gekennzeichnet, dass** der nichtlineare Kristall YCOB oder GdCOB ist.

11. Vorrichtung nach einem der vorhergehenden Ansprüche, **dadurch gekennzeichnet, dass** der Resonator so beschaffen ist, dass er den Betrieb des Lasers in der TEM_{0,0-}Mode ermöglicht.

12. Vorrichtung nach einem der vorhergehenden Ansprüche, **dadurch gekennzeichnet, dass** der Pumpstrahl (54) bei zwei aufeinander folgenden Durchgängen durch das aktive Material (10) absorbiert wird.

13. Vorrichtung nach einem der vorhergehenden Ansprüche, **dadurch gekennzeichnet, dass** die Temperaturregelungsmittel (45, 41, 42, 43, 44), um die Kavität (72) und ihre optischen Elemente auf Temperatur zu halten, eine mechanische Struktur (45, 41, 42, 43, 44) umfassen, die der Kavität (72) zugeordnet ist.

14. Vorrichtung nach Anspruch 13, **dadurch gekennzeichnet**, das die mechanische Struktur eine Strukturbasis (45) und das optische System tragende Elemente (41, 42, 43, 44) umfasst.

15. Vorrichtung nach Anspruch 13 oder 14, **dadurch gekennzeichnet, dass** die Strukturbasis (45) und die das optische System tragenden Elemente (41, 42, 43, 44) aus Kupfer oder einem anderen Wärme leitenden Material hergestellt und im Wärmekontakt miteinander verbunden sind.

16. Vorrichtung nach einem der Ansprüche 13 bis 15, **dadurch gekennzeichnet, dass** die Temperatur der Strukturbasis (45) mittels eines aktiven Systems geregelt wird.

17. Vorrichtung nach einem der Ansprüche 13 bis 16, **dadurch gekennzeichnet, dass** die mechanische Struktur (45, 41, 42, 43, 44) die Gestalt eines Behälters hat, der die Kavität (72) derart umschließt, dass sie abgedichtet ist.

18. Vorrichtung nach einem der vorhergehenden Ansprüche, **dadurch gekennzeichnet, dass** die Temperaturregelungsmittel (45, 41, 42, 43, 44) eine zusätzliche, autonome Wärmeregulationseinrichtung umfassen, um die Temperatur des nichtlinearen Kristalls (20) auf autonome Weise und präziser als für die anderen Elemente der Kavität zu stabilisieren.

19. Vorrichtung nach mindestens einem der vorhergehenden Ansprüche, **dadurch gekennzeichnet, dass** die Reflexionsmittel (30, 33, 36) zumindest teilweise durch reflektierende Beschichtungen auf dem Laserkristall (10) und/oder dem nichtlinearen Kristall (20) erhalten werden.

20. Verfahren zur Erzeugung eines sichtbaren Laserstrahls in einer Vorrichtung nach einem oder mehreren der vorhergehenden Ansprüche, wobei die Vorrichtung eine Laserkavität (72) des Typs umfasst, bei dem ein nichtlinearer Kristall (20) in die Laserkavität (72) eingebracht ist, um den sichtbaren Laserstrahl (51) durch Erzeugen der zweiten Harmonischen zu erhalten, **dadurch gekennzeichnet, dass** es die folgenden Schritte umfasst:
- Auswählen eines nichtlinearen Kristalls (20), der für eine kritische Typ-I-Phasenanpassung zugeschnitten ist;
- Ausrichten des nichtlinearen Kristalls (20) bei der Temperatur, die durch die der Kavität (72) zugeordneten Temperaturregelungsmittel (45) vorgegeben ist, um die Phasenanpassungsbedingung zu erfüllen;
- Optimieren der Konversion in die zweite Harmonische durch zusätzliche kleine Temperaturkorrekturen in der Nähe des vorgegebenen Wertes.

21. Verfahren nach Anspruch 20, **dadurch gekennzeichnet, dass** die Temperaturregelung bei negativer Rückführung erfolgt, wobei das Signal eines nahe dem nichtlinearen Kristall angeordneten Sensors erfasst wird.

22. Verfahren nach Anspruch 20 oder 21, **dadurch gekennzeichnet, dass** es ferner die folgenden Schritte umfasst:
- Reduzieren des so genannten Weglaufens des grundlegenden Laserstrahls (52), indem auf das Ausmaß der Hohlraumschwingung im Inneren des nichtlinearen Kristalls (20) so eingewirkt wird, dass der Winkel durch das Weglaufen innerhalb der Divergenz des Strahls ist;
- Auswählen der Länge des nichtlinearen Kristalls in Abhängigkeit von der angestrebten Fokussierung.

## Revendications

1. Appareil à diode laser pompé pour générer un faisceau d'énergie visible, du type comprenant :
- une cavité laser linéaire (72), dont la longueur ne dépasse pas dix fois la somme des longueurs des cristaux inclus dans le résonateur, comprenant au moins les éléments optiques discrets suivants (30, 33, 36, 10, 20) :
- des moyens réfléchissants (30 ; 33 ; 36) qui sont fortement réfléchissants à une longueur d'onde fondamentale d'un faisceau laser (52) généré par lesdites cavités (72), au moins l'un desdits moyens réfléchissants (30) étant traversé par un faisceau de pompage (54), au moins l'un desdits moyens réfléchissants (36) étant réfléchissant à ladite longueur d'onde fondamentale et une longueur d'onde de deuxième harmonique (51) par rapport à ladite longueur d'onde fondamentale et au moins l'un desdits moyens réfléchissants (33) étant fortement transmetteur à ladite deuxième harmonique (51) de ladite longueur d'onde fondamentale ;
- un matériau actif (10) avec une émission polarisée linéaire, ledit matériau actif (10) étant capable de générer ledit faisceau laser (52) à une longueur d'onde fondamentale ;
- un cristal non linéaire (20), à l'intérieur de ladite cavité (72) ;
**caractérisé en ce que** :
ledit cristal non linéaire (20) est capable de générer une deuxième harmonique (51) de ladite longueur d'onde fondamentale par synchronisme de phase de type I critique et que
ladite cavité (72) est associée à des moyens de thermostatisation (45 ; 41 ; 42 ; 43 ; 44) pour bloquer en température ladite cavité (72) et ses éléments optiques (30, 33, 36, 10, 20).

2. Appareil selon la revendication 1, **caractérisé en ce que** ledit matériau actif (10) est agencé de manière à maintenir les pertes d'aberration à moins de 2%.

3. Appareil selon l'une des revendications précédentes **caractérisé en ce que** ladite cavité (72) et les moyens optiques (30, 33, 36, 10, 20) qu'il comprend sont agencés de manière à réduire au minimum les pertes optiques.

4. Appareil selon l'une des revendications précédentes, **caractérisé en ce que** ladite cavité (72) et lesdits moyens optiques (30, 33, 36, 10, 20) sont agencés pour maintenir lesdites pertes optiques à ladite longueur d'onde fondamentale à moins de 2 %.

5. Appareil selon l'une des revendications précédentes, **caractérisé en ce que** ladite cavité (72) et lesdits moyens optiques (30, 33, 36, 10, 20) sont agencés pour maintenir lesdites pertes optiques à ladite longueur d'onde fondamentale dues à une aberration thermique à moins de 1 %.

6. Appareil selon l'une des revendications 1 à 5, **caractérisé en ce que** le matériau actif (10) est un cristal de Nd:GdVO₄.

7. Appareil selon l'une des revendications 1 à 5, **caractérisé en ce que** le matériau actif (10) est un cristal de Nd:YLF.

8. Appareil selon l'une des revendications 1 à 5, **caractérisé en ce que** le matériau actif (10) est un cristal de Nd:YVO₄.

9. Appareil selon l'une des revendications 6 à 8, **caractérisé en ce que** le cristal non linéaire est LBO.

10. Appareil selon l'une des revendications 6 à 8, **caractérisé en ce que** le cristal non linéaire est YCOB ou GdCOB.

11. Appareil selon l'une des revendications précédentes, **caractérisé en ce que** ledit résonateur est agencé pour permettre le fonctionnement du laser dans le mode TEM_{0,0}.

12. Appareil selon l'une des revendications précédentes, **caractérisé en ce que** le faisceau de pompage (54) est absorbé dans deux passages successifs à travers le matériau actif (10).

13. Appareil selon l'une des revendications précédentes, **caractérisé en ce que** lesdits moyens de thermostatisation (45 ; 41 ; 42 ; 43 ; 44) pour bloquer la température de ladite cavité (72) et ses éléments optiques comprennent une structure mécanique (45 ; 41 ; 42 ; 43 ; 44) associée à ladite cavité (72).

14. Appareil selon la revendication 13, **caractérisé en ce que** ladite structure mécanique comprend une base structurale (45) et des éléments pour soutenir l'optique (41 ; 42 ; 43 ; 44).

15. Appareil selon la revendication 13 ou 14, **caractérisé en ce que** lesdits base structurale (45) et éléments pour soutenir l'optique (41 ; 42 ; 43 ; 44) sont constitués de cuivre ou d'un autre matériau conducteur de chaleur et associés mutuellement en contact thermique.

16. Appareil selon l'une des revendications 13 à 15, **caractérisé en ce que** la température de la base structurale (45) est régulée au moyen d'un système actif.

17. Appareil selon l'une des revendications 13 à 16 **caractérisé en ce que** ladite structure mécanique (45 ; 41 ; 42 ; 43 ; 44) a la forme d'un conteneur, contenant ladite cavité (72) de manière hermétique.

18. Appareil selon l'une des revendications précédentes, **caractérisé en ce que** lesdits moyens de thermostatisation (45 ; 41 ; 42 ; 43 ; 44) comprennent un dispositif thermorégulateur autonome supplémentaire pour stabiliser la température du cristal non linéaire (20) d'une manière autonome et plus précise que les autres éléments de la cavité.

19. Appareil selon l'une des revendications précédentes, **caractérisé en ce que** les moyens réfléchissants (30 ; 33 ; 36) sont au moins en partie obtenus au moyens de dépôts réfléchissants sur le cristal laser (10) et/ou sur le cristal non linéaire (20).

20. Procédé pour générer un faisceau laser visible dans un appareil selon l'une ou plusieurs des revendications précédentes, ledit appareil comprenant une cavité laser (72) du type dans lequel un cristal non linéaire (20) est inséré dans ladite cavité laser (72) pour obtenir ledit faisceau laser visible (51) par une opération de génération de deuxième harmonique, **caractérisé en ce qu'**il comprend les opérations suivantes :
- une sélection d'un cristal non linéaire (20) découpé pour le synchronisme de phase de type I critique ;
- un alignement dudit cristal non linéaire (20) à une température prédéterminée par les moyens de thermostatisation (45) associés à ladite cavité (72) obtenant l'état de synchronisme de phase
- une optimisation de la conversion en deuxième harmonique avec des légers ajustements de température supplémentaires autour de la valeur prédéterminée.

21. Procédé selon la revendication 20, **caractérisé en ce que** l'opération de régulation de température se produit en rétroaction négative, en détectant le signal d'un capteur positionné à proximité du cristal non linéaire.

22. Procédé selon la revendication 20 ou 21, **caractérisé en ce qu'**il comprend en outre les opérations de :
- réduction de la perte du faisceau laser fondamental (52) opérant sur la dimension du mode de cavité à l'intérieur du cristal non linéaire (20), afin de contenir l'angle de perte à l'intérieur de la divergence du faisceau ;
- sélection de la longueur du cristal non linéaire en fonction de la focalisation souhaitée.
